# EUROPÄISCHE PATENTSCHRIFT

(11) **EP 3 423 328 B1**
(45) Veröffentlichungstag und Bekanntmachung des Hinweises auf die Patenterteilung: **13.11.2024**
(21) Anmeldenummer: 17707286.5
(22) Anmeldetag: 24.02.2017
(51) Int. Cl.: B60W 50/08, B60W 30/10, B60N 3/06, B60W 30/14, B60W 50/16, B60W 40/08

(54) **VORRICHTUNG ZUM STEUERN DER LÄNGSFÜHRUNG EINES ZUM ZUMINDEST TEILAUTOMATISIERTEN FAHREN AUSGEBILDETEN FAHRZEUGS**
DEVICE FOR CONTROLLING LONGITUDINAL GUIDANCE OF A VEHICLE DESIGNED TO BE DRIVEN IN AN AT LEAST PARTLY AUTOMATED MANNER
DISPOSITIF POUR COMMANDER LE CONTRÔLE LONGITUDINAL D'UN VÉHICULE CONÇU POUR UNE CONDUITE AU MOINS SEMI-AUTOMATIQUE

(30) Priorität: 02.03.2016 DE 102016203398
(43) Veröffentlichungstag der Anmeldung: 09.01.2019
(73) Patentinhaber: Bayerische Motoren Werke Aktiengesellschaft, 80809 München (DE)
(72) Erfinder: FRIEDRICH, Reiner, 85630 Grasbrunn (DE); AUGST, Alexander, 80937 Muenchen (DE); DORRER, Claus, 81927 Muenchen (DE)
(86) Internationale Anmeldenummer: PCT/EP2017/054322
(87) Internationale Veröffentlichungsnummer: WO 2017/148815

(56) Entgegenhaltungen:
- EP-A1- 2 604 462
- EP-A1- 2 604 462
- WO-A1-2005/105508
- WO-A1-2005/105508
- WO-A1-2013/117309
- WO-A1-2013/117309
- DE-A1- 102013 019 141
- DE-A1- 102013 019 141
- DE-A1- 102014 206 960
- DE-A1- 102014 206 960
- DE-A1- 102014 209 071
- DE-A1- 102014 209 071

## Beschreibung

Die Erfindung betrifft eine Vorrichtung zum Steuern der Längsführung eines zum zumindest teilautomatisierten Fahren ausgebildeten Fahrzeugs, wobei ein Bedienelement innerhalb vorgegebener Positionsgrenzen abhängig von einem Automatisierungsgrad des Fahrens sowie abhängig von einer ersten Bedingung arretierbar ist. Die Erfindung betrifft ferner ein Verfahren zum Steuern eines Pedalsystems sowie ein Computerprogrammprodukt.

Fahrzeuge werden in zunehmendem Maße mit Fahrerassistenzfunktionen ausgestattet, welche ein unterstütztes, ein teilautomatisiertes, ein hochautomatisiertes oder ein vollautomatisiertes Fahren ermöglichen, z.B. um den Fahrer von routinemäßigen Aufgaben zu entlasten oder ihn in kritischen Situationen zu unterstützen. Je höher der Automatisierungsgrad ist, desto höher sind die Anforderungen an, die Fahrfunktion unterstützende Sensoren, Aktoren und Recheneinheiten. Aus Gründen der Sicherheit, z.B. im Falle eines unsicheren Zustands oder einer nicht der Erwartung des Fahrers entsprechender Funktionsweise der Fahrfunktion, aber auch aufgrund eines noch nicht fertig entwickelten Regelwerks der Übernahme der Verantwortung im Falle eines Unfalls muss der Fahrer eines solchen Fahrzeugs daher im Stande sein, die Fahrzeugführung innerhalb kurzer Zeit zu übernehmen. In diesem Zusammenhang ist die Ausgabe einer sogenannten Übernahmeaufforderung in Form einer grafischen oder akustischen Fahrerinformation bekannt, die erscheint, wenn ein Fahrerassistenzsystem eine Fehlfunktion aufweist oder an seine Grenzen stößt.

Beispielsweise können solche Fahrerassistenzfunktion aktiv in die Längsführung oder in die Querführung des Fahrzeugs eingreifen oder diese zumindest teilweise übernehmen. Es sind zahlreiche Varianten von abstandsabhängigen Geschwindigkeitsregelfunktionen (Adaptive Cruise Control) sowie Lenkassistenten bzw. Stauassistenten bekannt. Fahrerassistenzfunktionen können eine Vielzahl von Fahraufgaben bis hin zum hochautomatisierten oder automatischen Fahren übernehmen. Solche Systeme bieten z.T. einen sehr unterschiedlichen Automatisierungsgrad an. Der Automatisierungsgrad kann innerhalb einer Strecke aufgrund diverser Randbedingungen wesentlich variieren.

Während der aktiven Regelung durch solche Fahrerassistenzfunktionen muss der Fahrer zum Teil für längere Zeiträume nicht mehr selbst aktiv das Fahrpedal oder das Bremspedal zur Längsführung des Fahrzeugs betätigen, einen bestimmten Pedalwinkel halten oder den Pedalwinkel wegen einer veränderten Steigung der Fahrbahn oder der Geschwindigkeit eines Vorderfahrzeugs nachführen. Dadurch entsteht der Nachteil, dass der Fuß des Fahrers für längere Zeitintervalle in einer Aktionsbereitschaft in einer unbequemen Lage verweilen muss. Ohne gesonderte Maßnahmen muss der Fuß des Fahrers häufig verkrampft über einem der Pedale schweben. Alternativ kann der Fuß abgewinkelt oder neben der Pedalen abgestellt werden, was eine schnelle Reaktion bei einer notwendigen Betätigung eines bestimmten Pedals erschwert. Auch steigt dadurch ein Risiko, dass es in einer für den Fahrer überraschenden Situation zu einer Verwechslung des Fahr- und Bremspedals kommen kann. Ferner kann (darf) der Fahrer des Fahrzeugs bei einem hochautomatisierten oder vollautomatisierten Fahren auch am Steuer schlafen. In diesem Fall steigt das Risiko einer ungewollten Betätigung eines der Pedale.

Aus der DE 10 2008 054 621 A1, der DE 10 2008 054 622 A1, der DE 10 2008 054 625 A1 und der DE 10 2008 054 626 A1 ist jeweils ein Fahrpedalmodul bekannt, das die Zusatzfunktion einer "Fußablage" aufweist, bei welcher das Fahrpedalmodul selbst direkt als Fußablage für den Fuß eines Fahrers dient. Dieses übereinstimmende Grundprinzip ist bei den oben genannten Druckschriften konstruktiv auf unterschiedliche Weise gelöst. So schlägt die DE 10 2008 054 621 A1 vor, ein Reibelement mit einem Pedalelement des Fahrpedalmoduls wirkzuverbinden. Das Reibelement ist auf einem Wellenstummel des Pedalelements angeordnet. Die DE 10 2008 054 622 A1 schlägt zur konstruktiven Realisierung des Fahrpedalmoduls vor, dass das Pedalelement des Fahrpedalmoduls einen Pedalarm aufweist, an welchem eine Feder, insbesondere eine Zugfeder oder eine Druckfeder, vorgesehen ist. Die DE 10 2008 054 621 A1 sieht vor, die Zusatzfunktion des Fahrpedalmoduls als Fußablage durch eine abschnittsweise Veränderung der Kraft/Weg-Kennlinie des Fahrpedalmoduls zu realisieren. Die DE 10 2008 054 626 A1 sieht vor, dass das Pedalelement des Fahrpedalmoduls einen Pendelarm aufweist, welcher mit einem Fußablagefunktionselement verbunden ist oder in den das Fußablagefunktionselement integriert ist. Allen Varianten ist gemein, dass die Zusatzfunktion beim Einschalten einer automatischen Steuerung, insbesondere beim Einschalten einer automatischen Geschwindigkeitsregelung, aktiviert wird. Zudem kann die Zusatzfunktion "Fußablage" auch bei einer Stop-and-Go-Funktion oder mit Umweltfunktionen, wie z.B. einem Umweltmodus zur Verbrauchs- und Schadstoffreduzierung, kombinierbar sein, sowie mit Kamerasystemen.

Die EP 2 604 462 A1 beschreibt ein Verfahren zum Steuern eines aktiven Fahrpedals, wobei drei Bedingungen erfüllt sein müssen, um die Fußablage-Funktion zu aktivieren. Neben einem positiven Signal eines Tempomats oder eines Abstandsregelsystems muss sich der Fahrpedalhebel in einer Leerlaufposition befinden. Ferner muss der Fahrer einstellen, ob die Fußablage-Funktion aktiviert werden soll. Nur beim Vorliegen dieser drei Bedingungen wird ein positives Fußablagesignal erzeugt, so dass eine entsprechende Rückstellkraft des Fahrpedals erzeugt wird. Liegt eine der drei Bedingungen nicht mehr vor, wird die Fußablage-Funktion zurückgenommen.

Die DE 10 2013 019 141 A1 offenbart ein Verfahren zum Betreiben eines Fahrerassistenz-Systems eines Kraftfahrzeugs und insbesondere einen Fahrmoduswechsel beim Fahrerassistenz-System. Mittels einer Sensoreinrichtung des Kraftfahrzeugs werden Fahrerdaten, die von einer Körperhaltung zumindest eines Teils des Fahrers abhängig sind, erfasst. Beim Empfangen eines Signals, das den Wechsel des Fahrmodus indiziert, wird überprüft, ob die Fahrerdaten eine vorbestimmte Sicherheitsbedingung erfüllen. Nur beim Vorliegen der erfüllten Sicherheitsbedingung wird in einen anderen Fahrmodus gewechselt.

Die DE 10 2014 209 071 A1 offenbart ein Verfahren zum Überwachen eines Fahrers eines Fahrzeugs mit Hilfe von Sensoren eines mobilen Endgeräts des Nutzers.

Es ist wünschenswert, ein Fahrpedalmodul und ein Verfahren, das dem Fahrer einerseits einen verbesserten Komfort und andererseits erhöhte Sicherheit gewährt, zu schaffen, welches funktional verbessert ist.

Diese Aufgabe wird gelöst durch eine Vorrichtung gemäß den Merkmalen des Patentanspruches 1, ein Verfahren gemäß den Merkmalen des Patentanspruches 14 und ein Computerprogrammprodukt gemäß den Merkmalen des Patentanspruches 15. Vorteilhafte Ausgestaltungen ergeben sich aus den abhängigen Patentansprüchen.

Die Erfindung schlägt eine Vorrichtung zum Steuern der Längsführung eines zum zumindest teilautomatisierten Fahren ausgebildeten Fahrzeugs vor, das zumindest ein Pedal zum Steuern der Längsführung durch einen Fahrer umfasst, wobei das zumindest eine Pedal innerhalb vorgegebener Positionsgrenzen abhängig von einer den Automatisierungsgrad der Fahrt des Fahrzeugs repräsentierenden Größe und von einer ersten Bedingung arretierbar ist. Die Arretierung des Pedals ist abhängig von der den Automatisierungsgrad der Fahrt des Fahrzeugs repräsentierenden Größe und einer zweiten Bedingung aufhebbar. Die Vorrichtung zeichnet sich dadurch aus, dass sie dazu eingerichtet ist, bei einem Übergang vom manuellen Fahren zum automatisierten Fahren an dem Pedal eine erste haptische Einwirkung in Form einer Vibration zu erzeugen und bei einem Übergang vom automatisierten Fahren zum manuellen Fahren an dem Pedal eine zweite haptische Einwirkung zu erzeugen, wobei die zweite haptische Einwirkung von der ersten haptischen Einwirkung unterscheidbar ist.

Die Vorrichtung kann ein Pedalmodul umfassen oder zusammen mit einem Pedalmodul verbaut sein. Insbesondere handelt es sich bei dem Pedal, das in der nachfolgenden Beschreibung mitunter auch als Bedienelement bezeichnet wird, um ein durch den Fuß des Fahrers bedienbares Pedal. Bei dem Pedal des Fahrpedalmoduls handelt es sich insbesondere um ein Fahrpedal zur Steuerung der Motorleistung des Fahrzeugs. Das Pedal des Fahrpedalmoduls kann jedoch auch ein Bremspedal oder ein kombiniertes Pedal sein, das sowohl eine Steuerung der Beschleunigung als auch der Verzögerung des Fahrzeugs ermöglicht. Das Bedienelement ist bevorzugt zu einem im Wesentlichen stufenlosen Steuern der Längsdynamik des Fahrzeugs ausgestaltet. Beispielsweise handelt es sich um ein Fahrpedal zu einer stufenlosen Führung, insbesondere auch Nachführung der Fahrzeuggeschwindigkeit.

Die Vorrichtung kann derart ausgestaltet sein, dass jeweils zumindest zwei erste Bedingungen zu ermitteln und zu überprüfen sind. Entsprechend dazu kann die Vorrichtung derart ausgestaltet sein, dass jeweils zumindest zwei zweite Bedingungen zu ermitteln und zu überprüfen sind.

Die Erfindung ermöglicht es, ein Pedal des Fahrpedalmoduls während einer zum zumindest teilweise automatisierten Fahren vorgesehenen Fahrfunktion in einem bestimmten Winkel zu arretieren, wobei ein Abstellen des Fußes des Fahrers auf das betreffende Pedal ohne eine unerwünschte Pedalbedienung ermöglicht wird. Diese Funktion der "Fußablage" wird dabei nicht unmittelbar mit dem Einschalten der Fahrfunktion bereitgestellt, sondern vielmehr erst, nachdem ein bestimmter Automatisierungsgrad erreicht wurde und, bevorzugt, nach einer zusätzlichen Überprüfung, dass eine (bestimmte) Nutzeraktion in einem vorgegebenen Zeitintervall vor oder zum Zeitpunkt des Erreichens des Automatisierungsgrads detektiert bzw. als hinreichend erkannt wurde oder wird. Letzteres stellt die erste Bedingung dar.

Bei der Nutzeraktion handelt es sich bevorzugt um eine bestimmte Nutzeraktion des Fahrers. Eine bestimmte Nutzeraktion kann dabei als eine Aktion des Nutzers an zumindest einem bestimmten Bedienelement des Fahrzeugs, insbesondere zur Steuerung der Längsführung und/oder Querführung des Fahrzeugs, verstanden werden. Ferner kann sich die bestimme Nutzeraktion des Fahrers auf eine Kombination aus Aktionen des Fahrers an zumindest zwei unterschiedlichen Bedienelementen des Fahrzeugs, insbesondere innerhalb eines bestimmten (eng definierten) Zeitintervalls, beziehen.

Die Überprüfung der bestimmten Nutzeraktion als die erste Bedingung kann z.B. umfassen, ob das Pedal für das vorgegebenes Zeitintervall vor dem Zeitpunkt des Erreichens des Automatisierungsgrads nicht aktiv betätigt worden ist und/oder kein Fußkontakt des Fahrers zu dem Pedal bestand. Ferner kann die Nutzeraktion auch eine bestimmte mit Mitteln der Bediengestenerkennung erkannte Bediengeste des Fahrers die im Zusammenhang mit der Führung des Fahrzeugs steht, sein. Die Nutzeraktion kann beispielsweise eine Bestätigung zu einer Fahrzeuginformation sein, die im Zusammenhang mit zu einer (aktuell oder zeitnah anfangenden) teilautomatisierten oder hochautomatisierten Fahrt ausgegeben wird.

Eine bestimmte Nutzeraktion kann beispielsweise auch ein Erfassen bzw. seitens des Fahrers das (aktive) Erfassen lassen der Identität des Fahrers, z.B. mit einer biometrischen Information sein. Dabei kann festgestellt werden, dass der Fahrer über die Risiken oder Bedingungen einer automatisierten Fahrt informiert ist und berechtigt ist, diese zu betreiben.

Die erste Bedingung kann auch eine durch den Fahrer des Fahrzeugs vorgenommene Einstellung im Fahrzeug sein, mit welcher eine Arretierung des Pedals beim zumindest teilweise automatisierten Fahren explizit oder implizit gewünscht wird. Hierzu kann der Fahrer, z.B. ein Bedienelement betätigen oder eine Auswahl in einem Kontextmenü mit einer entsprechenden Bedeutung treffen.

Durch die Kombination einer erhöhten Sicherheit und eines erhöhten Komforts für den Fahrer eines zum zumindest teilautomatisierten Fahren ausgebildeten Fahrzeugs werden im Stand der Technik bestehende Nachteile gelöst.

In einer Gefahrensituation kann der Fahrer somit aus der ihm, vom manuellen Fahren bekannten, Fußposition und/oder bei bereits bestehendem haptischen Kontakt zwischen seinem Fuß und einem bestimmten Pedal agieren bzw. reagieren. Auch kann eine Zeit, die z.B. zum haptischen oder kinästhetischen Auffinden des zu betätigenden Pedals durch den Fahrer (im Falle einer plötzlichen Übernahmeaufforderung einer Fahrerassistenzfunktion) benötigt wird, dadurch erheblich verringert werden. Ferner kann durch die Erfindung eine Souveränität und die sogenannte subjektive Sicherheit des Fahrers, insbesondere im Umgang mit dem Fahrzeug, zum zumindest teilweise automatisierten Fahren wesentlich erhöht werden.

Das Pedalmodul, insbesondere zumindest ein Pedal des Pedalmoduls, kann mit zumindest einem Sensor zur Erfassung einer Nutzeraktion ausgestaltet sein. Dabei kann der Sensor zur Erfassung einer Nutzeraktion ausgestaltet sein, die unabhängig von einer signifikanten Veränderung der Pedalposition, z.B. des Pedalwinkels, ausgeführt oder auszuführen versucht wird. Beispielsweise kann es sich bei dem zumindest einen Sensor um einen (im Wesentlichen) flachen, beispielsweise piezoelektrischen oder kapazitiven Sensors handeln, der das Anliegen des Fußes des Fahrers auf dem zugeordneten Pedal erfasst.

Der Begriff Automatisierungsgrad ist in dieser Beschreibung als ein Anteil an fahrerischen Aufgaben aufzufassen, die im Wesentlichen automatisch erfolgen können oder als Verhältnis von automatisch ausführbaren fahrerischen Aufgaben zu, vom Fahrer zu übernehmenden Fahraufgaben. Der Automatisierungsgrad kann mittels einer qualitativen oder quantitativen Größe, die den Automatisierungsgrad repräsentiert, ausgedrückt bzw. repräsentiert werden. Insbesondere handelt es sich bei der den Automatisierungsgrad repräsentierenden Größe der Fahrt des Fahrzeugs um eine jeweils aktuelle, auf die aktuellen Randbedingungen bezogene Größe und/oder aus der nahen Vergangenheit und/oder auf die nahe Zukunft bezogene Größe.

Der tatsächlich (ohne signifikante Erhöhung der Risiken) erreichbare Automatisierungsgrad der aus dem Stand der Technik bekannten Fahrerassistenzfunktionen kann in Abhängigkeit von mehreren Randbedingungen, z.B. von konkreten Verkehrssituationen, Eigenschaften des Verkehrs, baulichen Sondersituationen, Verhalten anderer Verkehrsteilnehmer in der Umgebung, Qualität der Navigationsdaten, der (typischerweise mangelnder) Realzeitfähigkeit von Fahrzeug-externen Daten etc., sehr variabel sein. Beispielsweise kann die den Automatisierungsgrad repräsentierende Größe dann als hoch angenommen werden, wenn der Automatisierungsgrad steigt und ein bestimmtes Maß überstiegen hat und/oder als niedrig angenommen werden, wenn dieser fällt und ein vorausbestimmtes Maß unterschritten hat. Besonders bevorzugt kann ein über die Zeit kumuliertes Maß des Automatisierungsgrads berücksichtigt werden.

Als die den Automatisierungsgrad repräsentierende Größe können beispielsweise nach VDA (Verband der Automobilindustrie) definierte Maße oder Kategoriewerte gelten. Beispielsweise können dies Klassen bzw. Kategoriewerte für folgende Automatisierungsgrade sein:

| | |
|---|---|
| A1: | unterstütztes Fahren; |
| A2: | teilautomatisiertes Fahren |
| A3: | hochautomatisiertes Fahren; |
| A4: | automatisches Fahren; |
| A0: | Automatisierungsgrad unbekannt oder niedrige Aussagen-Konfidenz. |

Darüber hinaus berücksichtigt die den Automatisierungsgrad repräsentierende Größe bestimmte Aspekte des erreichbaren bzw. geeigneten Automatisierungsgrads einzeln, selektiv oder in bestimmten Kombinationen. Beispielsweise kann eine den Automatisierungsgrad repräsentierende Größe der Fahrt kann auch selektiv, in Bezug auf zumindest zwei unterschiedliche Aspekte der Automatisierung der Bewegung des Fahrzeugs und/oder für zwei oder mehrere unterschiedliche Fahrerassistenzfunktionen des Fahrzeugs in der Steuereinheit berücksichtigt werden, z.B. in Bezug auf: eine Längsführung des Fahrzeugs und/oder eine Querführung des Fahrzeugs und/oder eine Durchführung eines Spurwechsels und/oder eine Durchführung eines Überholvorgangs und/oder eine Fahrerinformation, insbesondere im Zusammenhang mit der Fahrzeugführung.

Alle der diskutierten Merkmale der Erfindung können dabei separat und unterschiedlich für unterschiedliche Aspekte der Automatisierung angewandt werden.

Die den Automatisierungsgrad repräsentierende Größe kann auch abhängig von den Vorgaben des Fahrers und/oder von einer vorgespeicherten Bedienhistorie des Fahrers und/oder von, in einem Backend gespeicherten und vom Fahrzeug abrufbaren, Parametern oder weiteren zweckmäßigen Kriterien (z.B. Straßenart, etc.) ermittelt werden und/oder diese Kriterien berücksichtigen.

Besonders bevorzugt ist die erfindungsgemäße Vorrichtung zur Ermittlung einer, den Automatisierungsgrad repräsentierenden, Größe des Fahrzeugs für den aktuellen oder, insbesondere im Zeitintervall von +/- 2 Sekunden geltenden, vorausgesagten Automatisierungsgrad ausgestaltet. Dies kann insbesondere auch für eine nahe Zukunft von ca. 1 - 30 Sek erfolgen. Insbesondere kann das Pedalsystem zum Ermitteln, insbesondere Einlesen, eines Maßes des Automatisierungsgrads aus weiteren Vorrichtungen innerhalb oder außerhalb des Fahrzeugs ausgestaltet sein.

Wenn in der vorliegenden Beschreibung von einer Arretierung die Rede ist, so ist darunter ein zumindest teilweise mechanisches Einrasten des Pedals und/oder eine Bewegungseinschränkung, z.B. innerhalb bestimmter Positionsgrenzen bzw. Pedalwinkelwerte zu verstehen. Auch ein wesentlich erhöhter Bewegungswiderstand des Pedals fällt unter den Begriff des "Einrastens". Die vorgegebenen Positionsgrenzen bzw. das Arretieren können dabei eine oder mehrere Freiheitsgrade des Pedals betreffen. Zum Beispiel ist das Pedal bzw. der Mechanismus zur Arretierung derart ausgestaltet, dass es mit Mitteln eines oder mehrerer Aktoren im Wesentlichen innerhalb der vorgegebenen Positionsgrenzen gehalten wird. Bei den Aktoren kann es sich z.B. um solche Aktoren handeln, die zu einer adaptiven Steuerung eines sog. Pedal-Force-Feedbacks (Kraft-Rückmeldung) dienen.

Bei den vorgegebenen Positionsgrenzen des Pedals handelt es sich, wie beschrieben, um einen Pedalwinkel. Bei der Position kann es sich darüber hinaus um eine dreidimensionale (3D) Position handeln, z.B. wenn das Pedal zu dessen Betätigung nicht um eine Achse gedreht, sondern dieses geschoben, gewankt oder ein paralleler Hub ausgeführt wird.

Einhergehend mit der Arretierung des Pedals verändert sich das Bedienverhalten zumindest des einen (betreffenden) Pedals. Die Veränderung des Bedienverhaltens kann im Pedalmodul als Folge der Arretierung und/oder mittels einer entsprechenden, einhergehend ausgeführten elektronischen Steuerung vorgesehen werden. Insbesondere kann dabei die Einflussnahme des Fahrers auf die Längsführung des Fahrzeugs wesentlich beschränkt, unterbunden oder auf eine Notfunktion eingeschränkt werden.

Bei der Arretierung kann es sich um eine elektromechanische, insbesondere elektromagnetische Einschränkung der Bewegung des Pedals handeln. Alternativ oder zusätzlich kann das Pedal durch eine insbesondere gesteuerte oder geregelte Einwirkung von Aktoren innerhalb der vorgegebenen Grenzen gehalten werden. Ferner kann vorgesehen werden, dass durch einen oder mehrere Parameter die Gegenkraft eines betreffenden Pedals variiert wird.

Die erste Bedingung kann damit von dem gerade aktuellen Automatisierungsgrad, dem für die nahe Zukunft bestimmten (vorausgesagten) Automatisierungsgrad sowie einem Änderungstrend des Automatisierungsgrads abhängen. Der Automatisierungsgrad kann von einem bestimmten Fahrprofil oder einem Fahrerprofil abhängig sein. Auch können Automatisierungsgrade für unterschiedliche Aspekte der Automatisierung der Bewegung des Fahrzeugs und/oder für unterschiedliche Fahrerassistenzfunktionen des Fahrzeugs, die eine Längsführung und/oder eine Querführung des Fahrzeugs betreffen, angewandt werden.

Die Arretierung des Pedals ist erfindungsgemäß abhängig von der den Automatisierungsgrad repräsentierenden Größe und einer zweiten Bedingung aufhebbar. Beispielsweise kann eine aus Sicherheitsgründen erfolgte Arretierung des Pedals, z.B. bei einem schlafenden Fahrer während einer hochautomatisierten Fahrt, nur aufgehoben werden, wenn der Fahrer hinreichend wach bzw. aufmerksam ist. Die zweite Bedingung kann in einem einfachen Fall eine Einstellung im Fahrzeug sein, die durch den Fahrer vorgenommen wird oder wurde und mit der die Aufhebung der Arretierung des Pedals gewünscht wird.

Die zweite Bedingung, d.h. das Feststellen der zweiten Bedingung, kann dabei abhängig von der ersten Bedingung sein oder abhängig von einer ersten Bedingung unterschiedlich berücksichtigt werden.

Insbesondere kann die Arretierung aufgehoben werden, wenn der aktuelle oder für die (nahe) Zukunft bestimmte Automatisierungsgrad ein vorausbestimmtes Maß unterschreitet. Der Automatisierungsgrad kann dann als niedrig genug angenommen werden, wenn der Automatisierungsgrad, z.B. gemäß den zuvor beschriebenen Klassen bzw. Kategorien, sinkt und ein bestimmtes Maß unterschritten hat. Damit kann die zweite Bedingung ebenfalls von dem aktuellen Automatisierungsgrad, dem für die nahe Zukunft bestimmten (vorausgesagten) Automatisierungsgrad sowie einem Änderungstrend des Automatisierungsgrads abhängen. Ebenso kann vorgesehen sein, dass die zweite Bedingung abhängig ist von einem bestimmten Fahrprofil oder Fahrerprofil.

Gemäß einer zweckmäßigen Ausgestaltung kann die zweite Bedingung eine Übernahmeaufforderung bezüglich einer durch den Fahrer durchzuführenden Längsführung des Fahrzeugs umfassen. Die Übernahmeaufforderung kann mit Mitteln des Fahrzeugs, z.B. dem System zum zumindest teilweise automatisierten Fahren, generiert und/oder über eine Mensch-Maschine-Schnittstelle an den Fahrer übermittelt werden. Dies kann z.B. abhängig von einem erfolgten oder erwarteten Absinken des Automatisierungsgrads und/oder abhängig von der gerade vorherrschenden Verkehrssituation erfolgen.

Bei der Übernahmeaufforderung kann es sich um einen sog. Take-Over-Request (TOR) oder einen Hands-On-Request (HOR) oder um eine explizite Aufforderung handeln, das Pedal und/oder ein anderes Bedienelement (insbesondere Lenkrad) des Fahrzeugs zu bedienen. Bei einem HOR wird der Fahrer dazu aufgefordert, Hände und/oder Füße an betreffende Bedienelemente anzulegen, um gegebenenfalls korrigierend eingreifen zu können.

Ein solches Vorgehen kann besonders zweckmäßig sein, wenn eine "wesentliche fahrerische Aufgabe" in Bezug auf eine Längs- und/oder Querführung des Fahrzeugs durchzuführen ist. Eine solche wesentliche fahrerische Aufgabe kann eine durch den Fahrer gewünschte und im Verhältnis zu einer bereits durch das zumindest teilweise automatisierte Fahren umgesetzte, zusätzliche Beschleunigung oder Verzögerung des Fahrzeugs sein, welche zusätzlich oder in Relation zu der durch die Fahrzeugautomatisierung bestimmten Beschleunigung oder Verzögerung durchzuführen bzw. vorzunehmen ist.

Die zweite Bedingung kann abhängig sein von einer Dringlichkeit der Übernahmeaufforderung bzw. einer Kritikabilität einer aktuellen oder in Kürze erwarteten Verkehrssituation.

Gemäß einer zweckmäßigen Ausgestaltung ist die erste Bedingung als eine Nutzeraktion, insbesondere eine bestimmte Nutzeraktion, ausgestaltet, die in einem vorgegebenen Zeitintervall vor oder zum Zeitpunkt des Erreichens des Automatisierungsgrads detektiert wurde oder wird. Besonders bevorzugt umfasst die erste Bedingung die Information, ob zumindest ein Bedienelement zum Steuern der Längsführung des Fahrzeugs und/oder ein Bedienelement zum Steuern der Querführung des Fahrzeugs für ein vorgegebenes Zeitintervall nicht aktiv betätigt worden ist. Dies umfasst, dass kein Fußkontakt bzw. Handkontakt eines Fahrers zu dem Bedienelement zum Steuern der Längsführung des Fahrzeugs und/oder dem Bedienelement zum Steuern der Querführung des Fahrzeugs bestand.

Gemäß einer weiteren zweckmäßigen Ausgestaltung umfasst die zumindest eine erste Bedingung und/oder die zumindest eine zweite Bedingung zumindest einer den Automatisierungsgrad der Fahrt des Fahrzeugs repräsentierenden Größe eine für die nahe Zukunft bestimmte Automatisierung der Fahrt des Fahrzeugs. Dabei kann die Vorrichtung zum Arretieren des Bedienelements ausgestaltet werden, wenn ein für die nahe Zukunft (z.B. in einem Bereich zwischen 1 und 30 Sekunden) bestimmter Automatisierungsgrad ein vorausbestimmtes Maß überschreitet.

Gemäß einer weiteren zweckmäßigen Ausgestaltung umfasst die zumindest eine zweite Bedingung eine ein vorausbestimmtes Maß überschreitende Aktion des Fahrers mit dem Bedienelement zur Steuerung der Querführung des Fahrzeugs. Dabei kann die Vorrichtung zur Aufhebung der Arretierung ausgestaltet sein, wenn eine Aktion des Fahrers im Zusammenhang mit dem Bedienelement zur Steuerung der Querführung des Fahrzeugs erkannt wird, die ein vorausbestimmtes Maß überschreitet. Besonders bevorzugt kann eine Aktion des Fahrers eine Berührung, insbesondere ein Umgreifen, des Bedienelements zur Steuerung der Querführung des Fahrzeugs umfassen. Das Bedienelement zur Steuerung der Querführung des Fahrzeugs kann insbesondere ein Lenkrad des Fahrzeugs sein. Ferner kann das Bedienelement zur Steuerung der Querführung des Fahrzeugs auch als ein Joystick oder dergleichen ausgestaltet sein. Das Bedienelement zur Steuerung der Querführung des Fahrzeugs kann zusammen mit dem Bedienelement zur Steuerung der Längsführung des Fahrzeugs verbaut sein oder die gleiche oder benachbart angeordnete Griffflächen umfassen.

Das Greifen, insbesondere Umgreifen, des Bedienelements zur Steuerung der Querführung des Fahrzeugs kann mittels zumindest eines Sensors, insbesondere eines kapazitiven oder induktiven Sensors an dem Bedienelement ermittelt werden. Ein solcher Sensor ermöglicht auch die Ermittlung, ob ein bestimmtes Maß einer Anliegefläche (Umgriffsfläche) und/oder eine Kraft, insbesondere eine Umgriffkraft des Fahrers, überschritten wurde. Besonders bevorzugt ist die Vorrichtung zur Erfassung der Fahreraktion an einem Lenkrad des Fahrzeugs und zur Überprüfung ausgestaltet, dass diese ein vorausbestimmtes Maß überschreitet. Ferner ist die Vorrichtung dazu ausgestaltet, eine Arretierung des Bedienelements zur Steuerung der Längsführung des Fahrzeugs abhängig von der Überprüfung der erfassten Fahreraktion an dem Lenkrad des Fahrzeugs aufzuheben.

Gemäß einer weiteren zweckmäßigen Ausgestaltung umfasst die zumindest eine zweite Bedingung eine, mit Mitteln des Fahrzeugs ermittelbare Übernahmeaufforderung bezüglich einer durch den Fahrer durchzuführenden Längsführung des Fahrzeugs. Bei einer solchen Übernahmeaufforderung kann es sich um eine, mit Mitteln einer Fahrerassistenzfunktion generierte Aufforderung handeln, die ausgegeben wird, wenn der Fahrer zumindest die Längsführung des Fahrzeugs übernehmen soll. Eine solche Übernahmeaufforderung kann z.B. abhängig von (veränderten) Umfeldbedingungen oder einer Veränderung des Zustands oder Betriebsart einer Fahrerassistenzfunktion ausgegeben werden.

Gemäß einer weiteren zweckmäßigen Ausgestaltung umfasst die zweite Bedingung eine Übernahmeaufforderung bezüglich einer durch den Fahrer des Fahrzeugs durchzuführenden Querführung des Fahrzeugs, insbesondere eine Lenkbereitschaft und/oder eine Lenkaktion. Die zweite Bedingung, die die Arretierung des Pedals löst, wird festgestellt, wenn ein Lenkradsensor eine Griffkraft und/oder eine bestimmte Lenkaktion detektiert. Die Lenkbereitschaft kann mittels eines sog. Hands-On-Sensors am Lenkrad und/oder mit Hilfe einer im Innenraum des Fahrzeugs angeordneten Kamera detektiert werden. Solche Sensoren, z.B. auf kapazitiver Basis, sind dem Fachmann bekannt. Die Lenkaktion kann mittels eines Lenkwinkelsensors oder einer Lenkrafterfassung erkannt werden. Die zweite Bedingung liegt beispielsweise vor, wenn eine erhöhte, ein bestimmtes Maß übersteigende Umgriffkraft an einem oder zwei Stellen des Lenkrads festgestellt wird und eine gleichzeitige Krafteinwirkung auf eines der Pedale durch den Fuß des Fahrers festgestellt wird.

Dabei kann die Vorrichtung zur Aufhebung der Arretierung ausgestaltet sein, wenn mit Mitteln des Fahrzeugs, z.B. mittels einer Fahrerassistenzfunktion, festgestellt wird, dass der Fahrer, der in Lenkbereitschaft sein soll, zumindest eine Lenkaktion durchzuführen hat. Dabei kann dem Fahrer, mit der Aufforderung eine (bestimmte) Lenkaktion durchzuführen, auch eine Möglichkeit angeboten werden, eine entsprechende, sich aus einem bestimmten Manöverzusammenhang ergebende Längsführung des Fahrzeugs auszuführen.

Gemäß einer weiteren zweckmäßigen Ausgestaltung ist bzw. umfasst die zumindest eine zweite Bedingung eine Erkennung eines Übernahmewillens und/oder einer Übernahmefähigkeit des Fahrers in Bezug auf eine Fahraufgabe, insbesondere die Längsführung des Fahrzeugs. Der Übernahmewille kann anhand einer Kombination mehrerer Kriterien erkannt werden. Beispielsweise kann hierzu eine Analyse von Körpergesten, wie z.B. eine Geste zur Bedienung des Lenkrads und/oder eine Geste zur Bedienung eines Pedals und/oder eine (schnelle) Körperbewegung von einer z.B. halbliegenden Haltung zu einer fahrbereiten Haltung genutzt werden. Der Übernahmewille bzw. die Übernahmefähigkeit kann mittels einer Innenraumkamera des Fahrzeugs festgestellt werden, z.B. wenn die erkannten Hände des Fahrers sich (schnell) zum Lenkrad bewegen oder dieses greifen. Analog kann hierzu die Bereitschaft, das Pedal des Fahrpedalmoduls zu bedienen, erkannt werden. Auch eine Kombination dieser Gesten ist möglich.

Alternativ oder zusätzlich kann die Aufhebung der Arretierung im Falle einer Nicht-Übernahmefähigkeit verhindert oder auch an weitere Bedingungen geknüpft werden.

Die Übernahmefähigkeit kann zudem anhand von Fahraktionen des Fahrers erkannt werden. Hierzu können als Sensoren eine Innenraumkamera und dergleichen verwendet werden. Ebenso kann eine Nicht-Übernahmefähigkeit anhand mehrerer kritischer Bedienfehler, die der Fahrer vornimmt, ermittelt werden.

Gemäß einer weiteren zweckmäßigen Ausgestaltung ist die zumindest eine erste Bedingung und/oder die zumindest eine zweite Bedingung abhängig von einer mit Mitteln des Fahrzeugs festgestellten Notwendigkeit und/oder Handlungsempfehlung, ein bestimmtes Manöver durchzuführen. Dazu kann beispielsweise eine Information an den Fahrer des Fahrzeugs zu einem entsprechenden Manöver, etwa in Gestalt einer Handlungsanweisung, ausgegeben werden. Beispielsweise wird abhängig von einer Umfelderfassung festgestellt, dass bei einem aus Sicherheitsgründen notwendigen dynamischen Manöver des Fahrzeugs der Einfluss des Fahrers auf das Pedal kontraproduktiv sein kann. In diesem Fall wird das Pedal temporär arretiert. Eine Entsperrung erfolgt mit einem alternativen oder einem Sicherheitsbedienvorgang. Als weiteres Beispiel kann abhängig von der Umfelderfassung festgestellt werden, dass ein bestimmtes Manöver oder zumindest die Längsführung des Fahrzeugs bei diesem Manöver ausnahmsweise durch den Fahrer durchgeführt werden sollte. Dabei wird eine Information zu diesem Manöver, beispielsweise in Gestalt einer Handlungsanweisung, an den Fahrer ausgegeben. Entsprechend erfolgt eine Aufhebung der Arretierung des Pedals.

Gemäß einer weiteren zweckmäßigen Ausgestaltung ist die zumindest eine erste Bedingung und/oder die zumindest eine zweite Bedingung abhängig von einem oder mehreren, der folgenden und mit Mitteln des Fahrzeugs festgestellten Parameter: ein Aufmerksamkeitszustand, eine Blickrichtung, eine Blickakkomodation des Fahrers, eine Fahrerzustandserkennung, insbesondere ein Wachsamkeitszustand, ein Schlafzustand, eine Lidschlagerkennung, ein Sekundenschlafzustand des Fahrers. Es ist zweckmäßig, wenn eine Unterscheidung des Aufmerksamkeitszustands erfolgt, auf welche bestimmte Fahrbahnbereiche und/oder Objekte sich dieser bezieht. Objekte können aktuell relevante Verkehrsteilnehmer, ein vor dem eigenen Fahrzeug befindliches Fahrzeug oder auch ein hinter dem eigenen Fahrzeug her fahrendes Fahrzeug sein. So kann als zusätzliche Bedingung überprüft werden, ob der Fahrer tatsächlich auf die Fahrbahn schaut oder geschaut hat, ehe eine vollständige Aufhebung der Arretierung bzw. ein Übergang des Pedals in einen manuellen Modus erfolgt. Es kann auch, z.B. mittels Eye-Tracking, geprüft werden, ob der Fahrer auf einen Fahrbahnbereich und/oder Objekt auf der Fahrbahn oder durch einen Rückspiegel geschaut hat, wenn dies für die Pedalbedienung relevant ist.

Zu der Fahrerzustandserkennung gehört insbesondere ein allgemeiner, für das Fahren relevanter Zustand des Fahrers und/oder sein aktuell, in Bezug auf die fahrerische Aufgabe vorherrschende Zustand. Eine Arretierung des Pedals kann z.B. vorgenommen werden, wenn festgestellt wird, dass der Fahrer eingeschlafen oder unkonzentriert ist. Ferner kann, je nach erwartetem Bedarf, an der Mitwirkung des Fahrers an der Fahraktion zuerst der Fahrer geweckt und dann die Aufhebung der Arretierung des Fahrpedals erfolgen.

Gemäß einer weiteren zweckmäßigen Ausgestaltung sind die zumindest eine erste Bedingung und/oder die zumindest eine zweite Bedingung der Recheneinheit von einem mobilen Anwendergerät bereitgestellt, welche diese zumindest teilweise mit einem Sensor des Anwendergeräts ermittelt. Dies bedeutet, dass beim Arretieren des Pedals oder der Aufhebung der Arretierung Informationen einer auf einem mobilen Anwendergerät ablaufenden Applikation (kurz: App) verarbeitet werden. So kann eine solche Applikation als Fahrerparameter einen körperlichen Zustand des Fahrers auswerten und Eingang in die Pedalsteuerung finden.

Insbesondere handelt es sich bei dem mobilen Anwendergerät um ein mit dem Fahrzeug mitführbares (mitgeführtes) Anwendergerät, z.B. ein Smartphone, Tablet, Smart-Watch, sogenannte Datenbrille oder Smart-Closes. Besonders bevorzugt handelt es sich bei dem mobilen Anwendergerät um ein am Körper des Fahrers tragbares (getragenes) Anwendergerät. Insbesondere handelt es sich bei zumindest einem Fahrerparameter um einen, mit dem Sensor des Anwendergeräts erfassten Parameter des Körpers des Fahrers, wie z.B. Müdigkeitsparameter, Schlafparameter, Puls, sog. Gehirnwellen, z.B. Alpha-, Beta-, Theta-Wellen bzw. damit korrelierender Werte. Das mobile Anwendergerät kann eine entsprechende oder entsprechend eingerichtete Schnittstelle zum Austausch der Daten mit dem Fahrzeug bzw. mit der Vorrichtung umfassen und zu einem Betrieb mit der Vorrichtung, beispielsweise mittels der App eingerichtet sein.

Gemäß einer weiteren zweckmäßigen Ausgestaltung ist eine Arretierung des Bedienelements im Wesentlichen stufenlos oder zumindest in zwei Stufen vornehmbar, wobei zumindest ein Parameter der Arretierung, insbesondere zumindest eine vorgegebene Positionsgrenze, abhängig von einem qualitativen und/oder quantitativen Parameter zumindest der ersten Bedingung ist.

Die Arretierung des Bedienelements in zumindest zwei Stufen kann als zumindest zwei Positionsgrenzen, z.B. Winkelgrenzen verstanden werden, bei oder ab welchen eine Einschränkung der Beweglichkeit des Bedienelements erfolgt.

Eine weitere zweckmäßige Ausgestaltung sieht vor, dass eine Aufhebung der Arretierung stufenlos oder zumindest in zwei Stufen erfolgt. Dabei kann zumindest ein Parameter der Aufhebung der Arretierung, abhängig von einem qualitativen und/oder quantitativen Parameter, insbesondere im Zusammenhang mit der zumindest einen zweiten Bedingung stehen. Insbesondere kann vorgesehen werden, dass der zumindest eine Parameter der Aufhebung der Arretierung als ein Zeitintervall ausgestaltet ist, das die Zeit bis zum Erreichen zumindest eines ersten bestimmten Aufhebungszustands oder einer bestimmten Stufe der Aufhebung der Arretierung kennzeichnet. Mit anderen Worten kann ein arretiertes Pedal auch stufenweise oder in verzögerten Stufen "gelockert" werden, d.h. durch den Fahrer bewegbar oder bedienbar gemacht werden. Die Aufhebung der Arretierung kann dabei abhängig davon erfolgen, welche zweite Bedingung bzw. Kombination aus zumindest zwei zweiten Bedingungen vorliegt und/oder von einem quantitativen Parameter der zweiten Bedingung.

Gemäß einer weiteren zweckmäßigen Ausgestaltung liegen die vorgegebenen Positionsgrenzen für zumindest einen automatisierten Fahrmodus des Fahrzeugs außerhalb von weiteren Positionsgrenzen, die zum zumindest teilweise manuellen Fahren durch den Fahrer definiert sind. Beispielsweise kann das Pedal weiter in Richtung Fahrer verschoben werden und/oder einen anderen Winkel annehmen. Damit kann eine bequemere Pedalstellung für eine lange automatische Fahrt erreicht werden. Auch kann das Pedal, z.B. zur Erhöhung von Komfort oder Reduktion der Muskelunbeweglichkeit, im hochautomatisierten Modus innerhalb der vorgegebenen Positionsgrenzen (aktiv) bewegt werden.

Gemäß einer weiteren zweckmäßigen Ausgestaltung ist zumindest eine der vorgegebenen Positionsgrenzen abhängig von einem oder mehreren der folgenden Kriterien: einem für die aktuelle Fahrt relevanten Automatisierungsgrad; einem für die aktuelle Fahrt relevanten Geschwindigkeitsbereich; einer aktuellen Sitzposition oder Sitzeinstellung des Fahrers; einer Körperposition oder Pose des Fahrers; einem betreffenden Fahrer; einem Wachsamkeitszustand eines Fahrers. Mit anderen Worten können die vorgegebenen Positionsgrenzen des Pedals auf Körpergröße, Sitzposition oder nach Wunsch des Fahrers in Bezug auf ein automatisiertes Fahren auch anders eingestellt werden, als zumindest eine Position, die zu einer Nutzung zur Bedienung des Pedals durch den Fahrer dient. Letzteres findet in einem Fahrmodus ohne oder mit einer geringen Automatisierung statt. Die vorgegebenen Positionsgrenzen können vor oder während der automatisierten Fahrt variiert werden. Insbesondere kann das Pedal abhängig von obigen Kriterien in einen Modus mit entsprechenden Positionsgrenzen und gegebenenfalls einer Massagefunktion gebracht werden. Dadurch kann das arretierte Pedal den Komfort des Fahrers verbessern oder an besondere Bedürfnisse angepasst werden.

Eine weitere zweckmäßige Ausgestaltung sieht vor, dass die vorgegebenen Positionsgrenzen bezüglich ihres Winkels und/oder ihrer Position derart gewählt sind, dass sie sich zwischen einem ersten Positionsbereich, der in einem zumindest teilweise manuellen Fahrmodus des Fahrzeugs eine Fahrzeugbeschleunigung bewirkt, und einem zweiten Positionsbereich, der in dem zumindest teilweise manuellen Fahrmodus des Fahrzeugs eine Fahrzeugverzögerung bewirkt, befinden. Diese Ausgestaltungsvariante ist beispielsweise in einem elektrisch betriebenen Fahrzeug einsetzbar, bei dem mit einem Pedal sowohl die Beschleunigung als auch die Verzögerung steuerbar ist. In diesem Fall können die vorgegebenen Positionsgrenzen beim hochautomatisierten Fahren zwischen einer Stellung für die Fahrzeugbeschleunigung und einer Stellung für die Fahrzeugverzögerung liegen.

Es kann darüber hinaus zweckmäßig sein, die vorgegebenen Positionsgrenzen variabel zu wählen. Alternativ können die vorgegebenen Positionsgrenzen abhängig von der Fahrzeugbeschleunigung verändert werden. Der Fahrer kann im Falle der Übernahme zumindest der Längsführung des Fahrzeugs eine mehr oder minder passende, angepasste Startposition zur Fortsetzung der Steuerung des Fahrzeugs bekommen. Ein weitgehend nahtloser Übergang in die präzise dosierbare manuelle Beschleunigung kann dann durch den Fahrer ohne einen Beschleunigungssprung erfolgen.

Eine weitere zweckmäßige Ausgestaltung sieht vor, dass eine zu der ersten Bedingung alternative dritte Bedingung überprüft wird, die, falls zutreffend, anstelle der ersten Bedingung für die Entscheidung, ob die Arretierung des Pedals gelöst wird, verarbeitet wird. Insbesondere kann die alternative dritte Bedingung dazu genutzt werden, eine Überprüfung einer Fahreridentität oder eines Maßes für die Fahrerberechtigung zu steuern, wie z.B. die Berechtigung das Fahrzeug mit Hilfe einer Fahrerassistenzfunktion zu steuern.

Ebenso kann vorgesehen sein, dass eine zu der zweiten Bedingung alternative vierte Bedingung überprüft wird, die, falls zutreffend, anstelle der zweiten Bedingung für die Entscheidung, ob die Arretierung des Pedals gelöst wird, verarbeitet wird. So kann die vierte Bedingung abhängig von einer mechanischen oder elektromechanischen Einwirkung auf das Pedal, Lenkrad oder ein sonstiges Bedienelement des Fahrzeugs durch den Fahrer sein. Die vierte Bedingung kann z.B. dazu genutzt werden, die Überprüfung der Fahreridentität oder eines Maßes für die Fahrerberechtigung zu steuern, etwa die Berechtigung das Fahrzeug ohne Hilfe einer Fahrerassistenzfunktion zu steuern.

In diesem Zusammenhang kann weiterhin vorgesehen sein, dass die dritte Bedingung und/oder die vierte Bedingung abhängig sind von einer Kombination vorgegebener Krafteinwirkungen des Fahrers auf das Lenkrad, wobei die Krafteinwirkungen mittels einer Mustererkennung detektierbar sind. Beispielsweise kann hierbei eine Hin- und Her-Bewegung oder eine definierte manuelle Einwirkung, z.B. eine Kombination bestimmter Krafteinwirkungen, am Lenkrad überwacht und detektiert werden. Die dritte Bedingung und/oder die vierte Bedingung können darüber hinaus abhängig von einer Kombination von Betätigungen zumindest zweier unterschiedlicher Bedienelemente des Fahrzeugs sein.

Gemäß einer weiteren Ausgestaltung liegt die dritte Bedingung vor, wenn ein Druck durch den Fuß des Fahrers auf das Pedal, insbesondere eine bestimmte Drucksequenz oder Druckrichtung, detektierbar ist. Mit anderen Worten kann das Pedal mit einer mechanischen Redundanz, d.h. ohne Rücksicht auf weitere Kriterien, in einen manuellen Betriebszustand bzw. Modus versetzt werden. Dies bedeutet, mit Hilfe der dritten und/oder vierten Bedingung können damit in dieser Variante beim gleichzeitigen Vorliegen der ersten und/oder zweiten Bedingung, letztere überstimmt werden. Somit kann eine einfache, insbesondere ASIL (Automotive Safety Integrity Level)-fähige mechanische bzw. elektromechanische Redundanz realisiert werden. Die redundante vierte Bedingung kann dabei einen, eine bestimmte Kraft übersteigenden, insbesondere mehrmaligen Druck auf das Pedal umfassen. Alternativ kann eine seitliche Krafteinwirkung oder in eine entgegengesetzte Richtung wirkende Kraft, hervorgerufen durch einen Fuß unter dem Pedal, das Vorliegen der vierten Bedingung darstellen.

Zur Lösung der Aufgabe wird ferner ein Fahrzeug mit Mitteln zum zumindest teilautomatisierten Fahren und einem Pedalsystem vorgeschlagen, wobei das Pedalsystem gemäß der vorstehenden Beschreibung ausgebildet ist. Das Fahrzeug weist die gleichen Vorteile auf, wie diese vorstehend in Verbindung mit dem erfindungsgemäßen Pedalsystem erläutert wurden.

Die Erfindung schlägt ferner ein Verfahren zum Betreiben eines zumindest teilautomatisierten Fahrens eines Fahrzeugs mit der oben beschriebenen Vorrichtung vor. Das Verfahren umfasst die folgenden Schritte: Ermitteln einer den Automatisierungsgrad der Fahrt des Fahrzeugs repräsentierenden Größe, Ermitteln des Vorliegens zumindest einer ersten Bedingung und/oder zumindest einer zweiten Bedingung, Veranlassen des Arretierens eines Pedals zur Steuerung der Längsführung des Fahrzeugs innerhalb vorgegebener Positionsgrenzen in Abhängigkeit von der den Automatisierungsgrads der Fahrt des Fahrzeugs repräsentierenden Größe und der zumindest einen ersten Bedingung. Die Aufhebung der Arretierung des Pedals zur Steuerung der Längsführung des Fahrzeugs wird in Abhängigkeit von der den Automatisierungsgrad der Fahrt des Fahrzeugs repräsentierenden Größe und der zumindest einen zweiten Bedingung veranlasst. Das Verfahren zeichnet sich dadurch aus, dass es ferner die folgenden Schritte umfasst: Veranlassen des Ausgebens einer ersten haptischen Einwirkung in Form einer Vibration an dem Pedal bei einem Übergang vom manuellen Fahren zum automatisierten Fahren; und Veranlassen des Ausgebens einer zweiten haptischen Einwirkung an dem Pedal bei einem Übergang vom automatisierten Fahren zum manuellen Fahren, wobei die zweite haptische Einwirkung von der ersten haptischen Einwirkung unterscheidbar ist.

Das erfindungsgemäße Verfahren weist die gleichen Vorteile auf, wie diese oben in Verbindung mit dem erfindungsgemäßen Pedalsystem beschrieben wurden.

Das Verfahren kann weiter gemäß der obigen Beschreibung ausgestaltet sein.

Schließlich wird ein Computerprogrammprodukt vorgeschlagen, das direkt in den internen Speicher eines digitalen Rechners geladen werden kann und Softwarecodeabschnitte umfasst, mit denen die Schritte des hier beschriebenen Verfahrens ausgeführt werden, wenn das Produkt auf dem Rechner läuft. Bei dem Rechner handelt es sich insbesondere um eine Recheneinheit des Fahrzeugs oder des Pedalmoduls. Das Computerprogrammprodukt kann auf einem Speichermedium, wie z.B. einem USB-Speicherstick, einer DVD, einer CD-ROM, einer Festplatte oder dergleichen, gespeichert sein. Ebenso kann das Computerprogrammprodukt über eine Kommunikationsverbindung (drahtlos oder drahtgebunden) übertragbar sein.

Das erfindungsgemäße Fahrpedal erlaubt eine Erhöhung der objektiven Sicherheit sowie eine Reduktion von Fehlbedienungsrisiken. Dadurch, dass der Fahrer durch die Nutzung des Fahrpedals als Fußstütze bei einem automatisierten Fahrmodus seinen Fuß weniger angespannt halten muss, ergibt sich eine Erhöhung der subjektiven Sicherheit. Darüber hinaus ist der Komfort für den Fahrer wesentlich erhöht. Ein weiterer Vorteil besteht in der Verringerung der Übernahmezeit, falls eine Steuerung der Längsführung des Fahrzeugs erforderlich ist, da der Fuß bereits vor der Übernahme der Kontrolle am richtigen Pedal anliegt. Ein weiterer Vorteil besteht darin, dass Beschleunigungssprünge im Falle einer Übernahme der Längsführung nach einem hochautomatisierten Fahrmodus vermieden werden können, wodurch sich der Fahrkomfort, aber auch die Sicherheit bei der Fahrzeugführung erhöhen.

Die Erfindung wird nachfolgend näher anhand eines Ausführungsbeispiels in der Zeichnung erläutert. Es zeigen:
- Fig. 1: eine schematische Darstellung einer erfindungsgemäßen Vorrichtung zum Steuern der Längsführung eines zum zumindest teilautomatisierten Fahren ausgebildeten Fahrzeugs; und
- Fig. 2: ein Zustandsdiagramm, das gemäß einem Ausführungsbeispiel die erfindungsgemäße Steuerung des Fahrpedals illustriert.

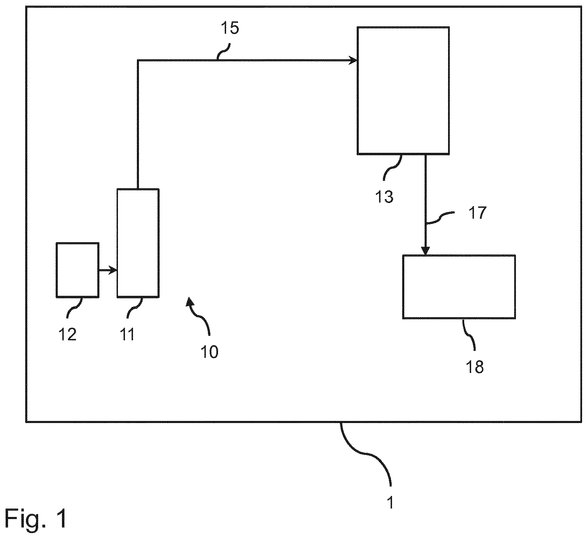

Fig. 1 zeigt eine erfindungsgemäße Vorrichtung in Gestalt eines Pedalmoduls 10 zum Steuern der Längsführung eines zum zumindest teilautomatisierten Fahren ausgebildeten Fahrzeugs 1. Lediglich zu Illustrationszwecken umfasst das Pedalmodul 10 ein einziges Pedal 11 als Bedienelement, welches beispielsweise zur Steuerung der Motorleistung dient und umgangssprachlich als Gaspedal bezeichnet wird. Alternativ kann das Pedal 11 auch ein Bremspedal oder ein kombiniertes Pedal sein, das sowohl eine Steuerung der Beschleunigung als auch eine Verzögerung des Fahrzeugs zulässt.

In Abhängigkeit einer jeweiligen Position, z.B. einem Pedalwinkel relativ zu einer Ausgangsposition, wird ein entsprechendes Signal 15, das die Position bzw. Bewegung des Fahrpedals repräsentiert, an eine Recheneinheit 13 des Pedalmoduls 10 übertragen. Die Recheneinheit 13 ist dazu ausgebildet, das Signal 15 zu verarbeiten und als Ergebnis der Verarbeitung einen Steuerparameter 17 an eine weitere Recheneinheit 18 zur Längsführung des Fahrzeugs zu übertragen. Die Recheneinheit 18 ihrerseits ist mit in der Figur nicht näher dargestellten Systemen, wie z.B. Aktoren, Sensoren und dergleichen, zum zumindest teilautomatisierten Fahren des Fahrzeugs 1 verbunden. Die Recheneinheit 18 ermöglicht einen (teil)automatisierten Betrieb des Fahrzeugs mit unterschiedlichen Automatisierungsgraden. Die Automatisierungsgrade können als Klassen oder Kategoriewerte, wie diese gemäß VDA definiert sind, vorliegen. Beispielsweise sind dies

| | |
|---|---|
| A1: | unterstütztes Fahren; |
| A2: | teilautomatisiertes Fahren; |
| A3: | hochautomatisiertes Fahren; |
| A4: | automatisches Fahren; |
| A0: | Automatisierungsgrad unbekannt oder niedrige Aussagen-Konfidenz |

Wird das Fahrzeug 1 mit Hilfe einer automatischen Geschwindigkeitsregelung betrieben, wie z.B. mittels Cruise Control (Automatisierungsgrad A1) oder mittels Adaptive Cruise Control (Automatisierungsgrad A2), dann wird die Betätigung des Pedals 11 durch den Fahrer des Fahrzeugs 1 überflüssig. Um jederzeit die automatische Geschwindigkeitsregelung, z.B. im Falle einer plötzlichen Gefahrensituation, wieder zu beenden, sollte der Fuß des Fahrers möglichst nah am Pedal 11 verbleiben. Um gleichzeitig auch den gesteigerten Komfort für den Fahrer vorzusehen, kann gemäß der hier beschriebenen Ausführungsform der Fahrer seinen Fuß auf einer Pedalplatte des Pedals 11 belassen bzw. ablegen, wenn das Pedal 11 arretiert ist und als "Fußablage" dient.

Die Arretierung des Pedals 11 erfolgt, sobald die Recheneinheit 18 zum zumindest teilweise automatisierten Fahren die Information ausgibt, dass der Automatisierungsgrad hinreichend hoch ist und gleichzeitig als Bedingung festgestellt wurde, dass z.B. das Pedal 11 für ein vorgegebenes Zeitintervall nicht aktiv betätigt worden ist und/oder kein Fußkontakt des Fahrers zu dem Pedal 11 bestand. Die erste Bedingung kann auch eine Einstellung im Fahrzeug sein, dass die Arretierung des Pedals 11 bei einem automatisierten Fahren mit nicht hinreichend hohem Automatisierungsgrad gewünscht wird. Als weiteres Kriterium kann berücksichtigt werden, dass in der nächsten, relativ langen Zeit die Pedalbedienung durch den Fahrer voraussichtlich nicht notwendig sein wird. In diesem Fall kann das Pedal 11 als Fußablage genutzt werden.

Die Vorrichtung kann derart ausgebildet sein, dass eine den Automatisierungsgrad der Fahrt des Fahrzeugs 1 repräsentierenden Größe und die zumindest eine erste Bedingung bzw. die zumindest eine zweite Bedingung zur Arretierung bzw. zur Aufhebung der Arretierung des zumindest einen Pedals 11 innerhalb vorgegebener Positionsgrenzen zum selben Zeitpunkt und/oder innerhalb eines vordefinierten Zeitintervalls, z.B. von 1 bis 5 Sekunden, vorliegen müssen.

Beim Übergang von dem manuellen Fahren in den Modus des (teil- oder hoch)automatisierten Fahrens wird durch einen Aktor 12 des Pedals 11 eine haptische Einwirkung oder Vibration erzeugt, so dass der Fahrer den Modusübergang wahrnehmen kann. Sollte der Fahrer das Arretieren des Pedals 11 nicht wünschen, reicht ein kurzer Druck auf das Pedal oder die Vornahme einer bestimmten anderen Bedienaktion während des Moduswechsels, um die Arretierung des Pedals 11 zu verhindern. Es ist zweckmäßig, den Moduswechsel zu visualisieren oder zusätzlich einen Ton auszugeben.

Einhergehend mit dem Übergang des Pedals 11 in den (teil- oder hoch)automatisierten Modus, verlässt das Pedal 11 seine für das manuelle Fahren genutzte Stellung und verwandelt sich in die beschriebene Fußablage. Die Fußablage kann automatisch oder nach Fahrerwunsch verstellt werden, so dass eine für den Fahrer komfortable Sitzposition erreicht ist. Diese Verstellung bleibt dabei ohne Auswirkung auf die Längsführung, insbesondere Fahrzeugbeschleunigung, des Fahrzeugs.

Sofern eine Übernahme einer Fahraufgabe durch den Fahrer erforderlich ist, wird durch die Recheneinheit 18 ein Signal, z.B. ein sog. Take-Over-Request (TOR) oder ein Hands-On-Request (HOR) oder ein Foot-On-Request (FOR), an den Fahrer des Fahrzeugs ausgegeben. Wenn der Fahrer daraufhin zum Lenkrad greift, erfolgt eine Aufhebung der Arretierung. Die Aufhebung der Arretierung kann sofort oder in Stufen erfolgen. Damit ist das Pedal 11 wieder voll oder teilweise zur Steuerung der Beschleunigung bzw. Verzögerung des Fahrzeugs freigegeben.

Bei einem Moduswechsel von dem automatisierten Fahren in den manuellen Modus erfolgt eine weitere haptische Einwirkung durch den Aktor 12 auf das Pedal 11. Vorzugsweise ist diese haptische Einwirkung unterscheidbar von der haptischen Einwirkung, die auf das Pedal 11 beim Übergang von dem manuellen Modus in das automatisierte Fahren übergeht. Dabei wird sichergestellt, dass der Fahrer den Moduswechsel wahrgenommen hat, so dass eine plötzliche, übermäßig große Beschleunigung oder Verzögerung, aufgrund des abgestützten Fußes auf dem Pedal 11, vermieden werden kann.

Darüber hinaus kann der Fahrer auch ohne eine Übernahmeaufforderung die Aufhebung der Arretierung des Pedals bewirken. Dies erfolgt z.B., indem er mit beiden Händen den Lenkradgriff zusammendrückt oder eine andere vordefinierte Einwirkung oder vordefinierte Kraft oder Kombination davon ausführt. Insbesondere können andere Bedienelemente betätigt oder eine Funktion in einem Auswahlmenü über eine Mensch-Maschine-Schnittstelle ausgewählt werden.

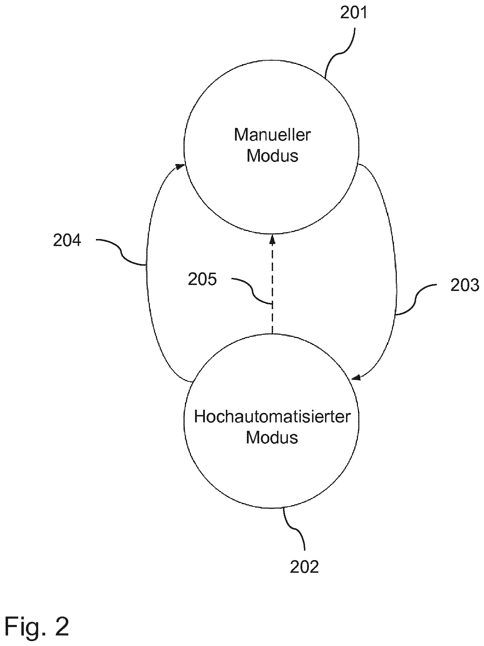

Fig. 2 zeigt ein Ausführungsbeispiel in Gestalt eines vereinfachten Zustandsdiagramms. Mit dem Bezugszeichen 201 ist der manuelle Modus als erster Zustand, mit 202 der automatisierte Modus als zweiter Zustand gekennzeichnet. Die Bezugszeichen 203, 204 und 205 repräsentieren Zustandsübergänge zwischen dem ersten Zustand 201 des manuellen Modus und dem zweiten Zustand 202 des automatisierten Fahrens.

Der manuelle Modus dient zur Beschleunigungs- und/oder Verzögerungssteuerung des Fahrzeugs durch den Fahrer durch bewusste Betätigung des Pedals 11. Mit anderen Worten wird das Pedal 11 in herkömmlicher Weise durch den Fahrer niedergedrückt, um beispielsweise die Motorleistung zu erhöhen. Im hochautomatisierten Modus ist das Pedal arretiert oder innerhalb bestimmter Positionsgrenzen beweglich. Damit kann das Pedal als ergonomische Fußablage genutzt werden, wobei eine Krafteinwirkung auf das arretierte Pedal ohne Auswirkung auf die Fahrzeuglängsführung, insbesondere Beschleunigung, ist.

Der Übergang von dem ersten Zustand 201 des manuellen Modus in den zweiten Zustand 202 des automatisierten Fahrens erfolgt abhängig vom Automatisierungsgrad des Fahrens sowie abhängig von einer ersten Bedingung 203. Hier wird überprüft, ob das Pedal für ein vorgegebenes Zeitintervall nicht aktiv betätigt worden ist und/oder kein Fußkontakt eines Fahrers zu dem Pedal bestand. Die erste Bedingung kann auch eine Einstellung im Fahrzeug sein, dass die Arretierung des Pedals 11 bei einem automatisierten Fahren mit nicht hinreichend hohem Automatisierungsgrad gewünscht wird.

Der Übergang von dem zweiten Zustand 202 des automatisierten Fahrens zu dem ersten Zustand 201 des manuellen Fahrens erfolgt abhängig vom Automatisierungsgrad des Fahrens (z.B. der aktuelle oder für die Zukunft bestimmte Automatisierungsgrad ein vorbestimmtes Maß unterschreitet)sowie beim Vorliegen einer zweiten Bedingung. Die die zweite Bedingung kann z.B. eine Übernahmeaufforderung bezüglich einer durch den Fahrer durchzuführenden Längs- und/oder Querführung des Fahrzeugs umfassen, wie z.B. einen Bremsvorgang oder einen Lenkeingriff bei sehr kurvigen Straßen.

Der Zustandsübergang 205 ermöglicht einen Übergang von dem zweiten Zustand 202 des automatisierten Fahrens zu dem ersten Zustand 201 des manuellen Modus mit Hilfe einer redundanten Bedingung, z.B. beim Abwurf bzw. Ausfall der Automatisierung. Liegt eine solche alternative oder redundante Bedingung vor, so genießt diese Vorrang gegenüber dem Zustandsübergang 204. Bei der alternativen oder redundanten Bedingung kann es sich beispielsweise um eine Hin- und Her-Bewegung und/oder eine speziell definierte Einwirkung auf das Lenkrad handeln. Ebenso kann die alternative oder redundante Bedingung bei einer Kombination von Betätigungen zweier oder mehrerer unterschiedlicher Bedienelemente des Fahrzeugs handeln.

Eine weitere alternative Bedingung umfasst einen bestimmten Druck durch den Fuß des Fahrers oder eine Drucksequenz oder Druckrichtung auf das Pedal 11. Dadurch können insbesondere sicherheitsrelevante Zustandsübergänge geschaffen werden.

### Bezugszeichenliste

- 1: Fahrzeug
- 10: Pedalmodul
- 11: Pedal
- 12: Aktor
- 15: Signal (das die Position / Bewegung des Pedals repräsentiert)
- 17: Steuerparameter
- 18: Recheneinheit

- 201: erster Zustand
- 202: zweiter Zustand
- 203: Zustandsübergang
- 204: Zustandsübergang
- 205: Zustandsübergang

## Patentansprüche

1. Vorrichtung zum Steuern der Längsführung eines zum zumindest teilautomatisierten Fahren ausgebildeten Fahrzeugs (1), umfassend zumindest ein Pedal (11) zum Steuern der Längsführung durch einen Fahrer, wobei das zumindest eine Pedal (11) innerhalb vorgegebener Positionsgrenzen abhängig von einer den Automatisierungsgrad der Fahrt des Fahrzeugs (1) repräsentierenden Größe und von einer ersten Bedingung arretierbar ist, und wobei die Arretierung des Pedals (11) abhängig von der den Automatisierungsgrad der Fahrt des Fahrzeugs (1) repräsentierenden Größe und zumindest einer zweiten Bedingung aufhebbar ist, **dadurch gekennzeichnet, dass** die Vorrichtung eingerichtet ist, bei einem Übergang vom manuellen Fahren zum automatisierten Fahren an dem Pedal (11) eine erste haptische Einwirkung in Form einer Vibration zu erzeugen und bei einem Übergang vom automatisierten Fahren zum manuellen Fahren an dem Pedal (11) eine zweite haptische Einwirkung zu erzeugen, wobei die zweite haptische Einwirkung von der ersten haptischen Einwirkung unterscheidbar ist.

2. Vorrichtung nach Anspruch 1, **dadurch gekennzeichnet, dass** die erste Bedingung und/oder die zumindest eine zweite Bedingung umfasst, dass die den Automatisierungsgrad der Fahrt des Fahrzeugs (1) repräsentierende Größe eine bestimmte Automatisierung der Fahrt des Fahrzeugs (1) aufweist, die zwischen 1 und 30 Sekunden in der Zukunft liegt.

3. Vorrichtung nach einem der vorhergehenden Ansprüche, **dadurch gekennzeichnet, dass** die zumindest eine zweite Bedingung eine ein vorausbestimmtes Maß überschreitende Aktion des Fahrers mit einem Bedienelement zur Steuerung der Querführung des Fahrzeugs (1) umfasst.

4. Vorrichtung nach einem der vorhergehenden Ansprüche, **dadurch gekennzeichnet, dass** die zumindest eine zweite Bedingung eine mit Mitteln des Fahrzeugs (1) ermittelte Übernahmeaufforderung bezüglich einer durch den Fahrer durchzuführenden Längsführung des Fahrzeugs (1) umfasst.

5. Vorrichtung nach einem der vorhergehenden Ansprüche, **dadurch gekennzeichnet, dass** die zumindest eine zweite Bedingung eine Übernahmeaufforderung bezüglich einer durch den Fahrer des Fahrzeugs (1) durchzuführenden Querführung des Fahrzeugs (1), insbesondere eine Lenk-Bereitschaft und/oder eine Lenkaktion, umfasst.

6. Vorrichtung nach einem der vorhergehenden Ansprüche, **dadurch gekennzeichnet, dass** die zumindest eine zweite Bedingung eine Erkennung eines Übernahmewillens und/oder einer Übernahmefähigkeit des Fahrers in Bezug auf eine Fahraufgabe, insbesondere die Längsführung des Fahrzeugs (1), ist.

7. Vorrichtung nach einem der vorhergehenden Ansprüche, **dadurch gekennzeichnet, dass** die erste Bedingung und/oder die zumindest eine zweite Bedingung abhängig von einer mit Mitteln des Fahrzeugs (1) festgestellten Notwendigkeit und/oder Handlungsempfehlung, ein bestimmtes Manöver durchzuführen, ist.

8. Vorrichtung nach einem der vorhergehenden Ansprüche, **dadurch gekennzeichnet, dass** die erste Bedingung und/oder die zumindest eine zweite Bedingung abhängig von einem oder mehreren, der folgenden und mit Mitteln des Fahrzeugs (1) festgestellten Parameter ist:
- Aufmerksamkeitszustand, Blickrichtung, Blickakkomodation des Fahrers;
- Fahrerzustandserkennung, insbesondere Wachsamkeitszustand, Schlafzustand, Lidschlagerkennung, Sekundenschlafzustands des Fahrers.

9. Vorrichtung nach einem der vorhergehenden Ansprüche, **dadurch gekennzeichnet, dass** die erste Bedingung und/oder die zweite Bedingung der Recheneinheit von einem mobilen Anwendergerät bereitgestellt sind, welche diese zumindest teilweise mit einem Sensor des Anwendergeräts ermittelt.

10. Vorrichtung nach einem der vorhergehenden Ansprüche, **dadurch gekennzeichnet, dass** eine Arretierung des Pedals (11) im Wesentlichen stufenlos oder zumindest in zwei Stufen vornehmbar ist, wobei zumindest ein Parameter der Arretierung, insbesondere zumindest eine vorgegebene Positionsgrenze, abhängig von einem qualitativen und/oder quantitativen Parameter zumindest einer ersten Bedingung ist.

11. Vorrichtung nach einem der vorhergehenden Ansprüche, **dadurch gekennzeichnet, dass** die vorgegebenen Positionsgrenzen für zumindest einen automatisierten Fahrmodus des Fahrzeugs (1) außerhalb von weiteren Positionsgrenzen, die zum zumindest teilweise manuellen Fahren durch den Fahrer definiert sind, liegen.

12. Vorrichtung nach einem der vorhergehenden Ansprüche, **dadurch gekennzeichnet, dass** zumindest eine der vorgegebenen Positionsgrenze abhängig ist von einem oder mehreren der folgenden Kriterien:
- einem für die aktuelle Fahrt relevanten Automatisierungsgrad;
- einem für die aktuelle Fahrt relevanten Geschwindigkeitsbereich;
- einer aktuellen Sitzposition oder Sitzeinstellung des Fahrers;
- einer Körperposition oder Pose des Fahrers;
- einem betreffenden Fahrer;
- einem Wachsamkeitszustand eines Fahrers.

13. Vorrichtung nach einem der vorhergehenden Ansprüche, **dadurch gekennzeichnet, dass** die vorgegebenen Positionsgrenzen bezüglich ihres Winkels und/oder ihrer Position derart gewählt sind, dass sie sich zwischen einem ersten Positionsbereich, der in einem zumindest teilweise manuellen Fahrmodus des Fahrzeugs (1) eine Fahrzeugbeschleunigung bewirkt, und einem zweiten Positionsbereich, der in dem zumindest teilweise manuellen Fahrmodus des Fahrzeugs (1) eine Fahrzeugverzögerung bewirkt, befinden.

14. Verfahren zum Betreiben eines zumindest teilautomatisierten Fahrens eines Fahrzeugs mit der Vorrichtung gemäß einem der Ansprüche 1 bis 13, mit den Schritten:
- Ermitteln einer den Automatisierungsgrad der Fahrt des Fahrzeugs (1) repräsentierenden Größe,
- Ermitteln des Vorliegens zumindest einer ersten Bedingung und/oder zumindest einer zweiten Bedingung,
- Veranlassen des Arretierens eines Pedals (11) zur Steuerung der Längsführung des Fahrzeugs (1) innerhalb vorgegebener Positionsgrenzen in Abhängigkeit von der den Automatisierungsgrads der Fahrt des Fahrzeugs (1) repräsentierenden Größe und der zumindest einen ersten Bedingung,
- Veranlassen der Aufhebung der Arretierung des Pedals (11) zur Steuerung der Längsführung des Fahrzeugs (1) in Abhängigkeit von der den Automatisierungsgrad der Fahrt des Fahrzeugs (1) repräsentierenden Größe und der zumindest einen zweiten Bedingung;
**dadurch gekennzeichnet, dass** das Verfahren ferner umfasst:
- Veranlassen des Ausgebens einer ersten haptischen Einwirkung in Form einer Vibration an dem Pedal (11) bei einem Übergang vom manuellen Fahren zum automatisierten Fahren; und
- Veranlassen des Ausgebens einer zweiten haptischen Einwirkung an dem Pedal (11) bei einem Übergang vom automatisierten Fahren zum manuellen Fahren, wobei die zweite haptische Einwirkung von der ersten haptischen Einwirkung unterscheidbar ist.

15. Computerprogrammprodukt, das direkt in den internen Speicher eines digitalen Rechners geladen werden kann und Softwarecodeabschnitte umfasst, mit denen die Schritte gemäß Anspruch 14 ausgeführt werden, wenn das Produkt auf dem Rechner läuft.

## Claims

1. Device for controlling the longitudinal guidance of a vehicle (1) that is designed for at least partly automated driving, comprising at least one pedal (11) for a driver to control the longitudinal guidance, wherein the at least one pedal (11) can be blocked within predefined position limits on the basis of a variable that represents the level of automation of the journey of the vehicle (1) and on the basis of a first condition,
and wherein the blocking of the pedal (11) can be suspended on the basis of the variable that represents the level of automation of the journey of the vehicle (1) and on the basis of at least one second condition,
**characterized in that** the device is configured to respond to a transition from manual driving to automated driving by producing a first haptic effect in the form of a vibration on the pedal (11) and to respond to a transition from automated driving to manual driving by producing a second haptic effect on the pedal (11), the second haptic effect being distinguishable from the first haptic effect.

2. Device according to Claim 1, **characterized in that** the first condition and/or the at least one second condition encompasses the circumstance that the variable representing the level of automation of the journey of the vehicle (1) has a particular automation of the journey of the vehicle (1) that is between 1 and 30 seconds in the future.

3. Device according to either of the preceding claims, **characterized in that** the at least one second condition encompasses an action by the driver that exceeds a predetermined extent using an operator control element for controlling the lateral guidance of the vehicle (1).

4. Device according to one of the preceding claims, **characterized in that** the at least one second condition encompasses a transfer request regarding a longitudinal guidance of the vehicle (1) to be performed by the driver, which transfer request is identified using means of the vehicle (1).

5. Device according to one of the preceding claims, **characterized in that** the at least one second condition encompasses a transfer request regarding a lateral guidance of the vehicle (1) to be performed by the driver of the vehicle (1), in particular a steering readiness and/or a steering action.

6. Device according to one of the preceding claims, **characterized in that** the at least one second condition is detection of a willingness and/or capability of the driver to take over a driving task, in particular the longitudinal guidance of the vehicle (1).

7. Device according to one of the preceding claims, **characterized in that** the first condition and/or the at least one second condition is dependent on a necessity and/or handling recommendation for performing a particular manoeuvre as determined using means of the vehicle (1).

8. Device according to one of the preceding claims, **characterized in that** the first condition and/or the at least one second condition is dependent on one or more of the following parameters determined using means of the vehicle (1):
- state of attentiveness, line of sight, sight accommodation of the driver;
- driver state detection, in particular state of alertness, state of sleep, blink detection, state of microsleep of the driver.

9. Device according to one of the preceding claims, **characterized in that** the first condition and/or the second condition are delivered to the computing unit of a mobile user device, which identifies at least some of said conditions using a sensor of the user device.

10. Device according to one of the preceding claims, **characterized in that** a blocking of the pedal (11) is substantially stageless or at least can be carried out in two stages, wherein at least one parameter of the blocking, in particular at least one predefined position limit, is dependent on a qualitative and/or quantitative parameter of at least a first condition.

11. Device according to one of the preceding claims, **characterized in that** the predefined position limits for at least one automated driving mode of the vehicle (1) lie outside further position limits that are defined by the driver for at least partly manual driving.

12. Device according to one of the preceding claims, **characterized in that** at least one of the predefined position limits is dependent on one or more of the following criteria:
- a level of automation relevant to the current journey;
- a velocity range relevant to the current journey;
- a current seat position or seat setting of the driver;
- a body position or pose of the driver;
- a driver in question;
- a state of alertness of a driver.

13. Device according to one of the preceding claims, **characterized in that** the predefined position limits are selected in terms of their angle and/or position such that they are situated between a first position range, which brings about an acceleration of the vehicle in an at least partly manual driving mode of the vehicle (1), and a second position range, which brings about a deceleration of the vehicle in the at least partly manual driving mode of the vehicle (1).

14. Method for operating an at least partly automated driving of a vehicle using the device according to one of Claims 1 to 13, having the steps of:
- identifying a variable that represents the level of automation of the journey of the vehicle (1),
- identifying the existence of at least one first condition and/or at least one second condition,
- instigating the blocking of a pedal (11) for controlling the longitudinal guidance of the vehicle (1) within predefined position limits on the basis of the variable that represents the level of automation of the journey of the vehicle (1) and on the basis of the at least one first condition,
- instigating the suspension of the blocking of the pedal (11) for controlling the longitudinal guidance of the vehicle (1) on the basis of the variable that represents the level of automation of the journey of the vehicle (1) and on the basis of the at least one second condition,
**characterized in that** the method further comprises:
- instigating the output of a first haptic effect in the form of a vibration on the pedal (11) in response to a transition from manual driving to automated driving; and
- instigating the output of a second haptic effect on the pedal (11) in response to a transition from automated driving to manual driving, the second haptic effect being distinguishable from the first haptic effect.

15. Computer program product that can be loaded directly into the internal memory of a digital computer and comprises software code sections that are used to carry out the steps according to Claim 14 when the product is running on the computer.

## Revendications

1. Dispositif pour commander le contrôle longitudinal d'un véhicule (1) conçu pour une conduite au moins partiellement automatisée, comprenant au moins une pédale (11) permettant au conducteur de commander le contrôle longitudinal, l'au moins une pédale (11) pouvant être bloquée entre des limites de position prédéterminées en fonction d'une grandeur représentant le degré d'automatisation de la conduite du véhicule (1) et d'une première condition, et
le blocage de la pédale (11) pouvant être supprimé en fonction de la grandeur représentant le degré d'automatisation de la conduite du véhicule (1) et d'au moins une seconde condition,
**caractérisé en ce que** le dispositif est conçu pour générer une première action haptique sous forme de vibration sur la pédale (11) lors d'une transition de la conduite manuelle à la conduite automatisée, et pour générer une seconde action haptique sur la pédale (11) lors d'une transition de la conduite automatisée à la conduite manuelle, la seconde action haptique étant distincte de la première action haptique.

2. Dispositif selon la revendication 1, **caractérisé en ce que** la première condition et/ou l'au moins une seconde condition comprend le fait que la grandeur représentant le degré d'automatisation de la conduite du véhicule (1) présente une automatisation déterminée de la conduite du véhicule (1), qui se situe entre 1 et 30 secondes dans le futur.

3. Dispositif selon l'une quelconque des revendications précédentes, **caractérisé en ce que** l'au moins une seconde condition comprend une action du conducteur, dépassant une valeur prédéterminée, au moyen d'un élément de commande destiné à commander la direction transversale du véhicule (1).

4. Dispositif selon l'une quelconque des revendications précédentes, **caractérisé en ce que** l'au moins une seconde condition comprend une demande de reprise, déterminée par des moyens du véhicule (1), concernant un contrôle longitudinal du véhicule (1) devant être effectué par le conducteur.

5. Dispositif selon l'une quelconque des revendications précédentes, **caractérisé en ce que** l'au moins une seconde condition comprend une demande de reprise concernant un contrôle transversal du véhicule (1) devant être effectué par le conducteur du véhicule (1), en particulier une capacité d'actionnement du volant et/ou une action d'actionnement du volant.

6. Dispositif selon l'une quelconque des revendications précédentes, **caractérisé en ce que** l'au moins une seconde condition est une détection d'une volonté de reprise et/ou d'une capacité de reprise du conducteur en ce qui concerne une tâche de conduite, en particulier le contrôle longitudinal du véhicule (1).

7. Dispositif selon l'une quelconque des revendications précédentes, **caractérisé en ce que** la première condition et/ou l'au moins une seconde condition dépend d'une nécessité et/ou d'une recommandation d'action, déterminée par des moyens du véhicule (1), d'effectuer une manoeuvre spécifique.

8. Dispositif selon l'une quelconque des revendications précédentes, **caractérisé en ce que** la première condition et/ou l'au moins une seconde condition dépend d'un ou plusieurs des paramètres suivants, déterminés par des moyens du véhicule (1) :
- état d'attention, direction du regard, accommodation du regard du conducteur ;
- reconnaissance de l'état du conducteur, en particulier état de vigilance, état de sommeil, reconnaissance du clignement des paupières, état de micro-sommeil du conducteur.

9. Dispositif selon l'une quelconque des revendications précédentes, **caractérisé en ce que** la première condition et/ou la seconde condition sont fournies à l'unité de calcul par un appareil mobile de l'utilisateur, qui détermine ces conditions au moins partiellement au moyen d'un capteur de l'appareil de l'utilisateur.

10. Dispositif selon l'une quelconque des revendications précédentes, **caractérisé en ce qu'**un blocage de la pédale (11) peut être effectué de manière sensiblement continue ou au moins en deux étapes, au moins un paramètre du blocage, en particulier au moins une limite de position prédéterminée, dépendant d'un paramètre qualitatif et/ou quantitatif d'au moins une première condition.

11. Dispositif selon l'une quelconque des revendications précédentes, **caractérisé en ce que** les limites de position prédéterminées pour au moins un mode de conduite automatisée du véhicule (1) se situent en dehors d'autres limites de position qui sont définies par le conducteur pour la conduite au moins partiellement manuelle.

12. Dispositif selon l'une quelconque des revendications précédentes, **caractérisé en ce qu'**au moins l'une des limites de position prédéterminées dépend d'un ou de plusieurs des critères suivants :
- un degré d'automatisation pertinent pour la conduite actuelle ;
- une plage de vitesses pertinente pour la conduite actuelle ;
- une position de siège actuelle ou un réglage de siège actuel du conducteur ;
- une position corporelle ou une posture du conducteur ;
- un conducteur concerné ;
- un état de vigilance d'un conducteur.

13. Dispositif selon l'une quelconque des revendications précédentes, **caractérisé en ce que** les limites de position prédéterminées sont choisies en fonction de leur angle et/ou de leur position de manière à ce qu'elles se situent entre une première plage de positions, qui provoque une accélération du véhicule dans un mode de conduite au moins partiellement manuel du véhicule (1), et une seconde plage de positions, qui provoque une décélération du véhicule dans le mode de conduite au moins partiellement manuel du véhicule (1).

14. Procédé pour mettre en œuvre une conduite au moins partiellement automatisée d'un véhicule au moyen du dispositif selon l'une quelconque des revendications 1 à 13, comprenant les étapes suivantes :
- la détermination d'une grandeur représentant le degré d'automatisation de la conduite du véhicule (1),
- la détermination de la présence d'au moins une première condition et/ou d'au moins une seconde condition,
- le déclenchement du blocage d'une pédale (11) pour commander le contrôle longitudinal du véhicule (1) entre des limites de position prédéterminées en fonction de la grandeur représentant le degré d'automatisation de la conduite du véhicule (1) et de l'au moins une première condition,
- le déclenchement de la suppression du blocage de la pédale (11) pour commander le contrôle longitudinal du véhicule (1) en fonction de la grandeur représentant le degré d'automatisation de la conduite du véhicule (1) et de l'au moins une seconde condition ;
**caractérisé en ce que** le procédé comprend en outre :
- le déclenchement de l'émission d'un premier effet haptique sous forme de vibration sur la pédale (11) lors d'une transition de la conduite manuelle à la conduite automatisée ; et
- le déclenchement de l'émission d'un second effet haptique sur la pédale (11) lors d'une transition de la conduite automatisée à la conduite manuelle, le second effet haptique étant distinct du premier effet haptique.

15. Produit de programme informatique pouvant être directement chargé dans la mémoire interne d'un ordinateur numérique et comprenant des sections de code logiciel permettant de mettre en œuvre les étapes selon la revendication 14 lorsque le produit est exécuté sur l'ordinateur.
